# FASCICULE DE BREVET EUROPEEN

(11) **EP 1 998 953 B1**
(45) Date de publication et mention de la délivrance du brevet: **07.07.2010**
(21) Numéro de dépôt: 07731732.9
(22) Date de dépôt: 12.03.2007
(51) Int. Cl.: B29C 70/50, B29B 15/12

(54) **PROCÉDÉ POUR LA RÉALISATION D'UN SEMI-PRODUIT COMPOSITE RENFORCÉ ET ESTAMPABLE**
VERFAHREN ZUR HERSTELLUNG EINES PRÄGBAREN VERSTÄRKTEN HALBZEUGS AUS VERBUNDWERKSTOFF
PPROCESS FOR PRODUCING A STAMPABLE REINFORCED COMPOSITE SEMI-FINISHED PRODUCT

(30) Priorité: 28.03.2006 FR 0651075
(43) Date de publication de la demande: 10.12.2008
(73) Titulaire: Fibroline France, 69130 Ecully (FR)
(72) Inventeur: CARAMARO, Laurence, F-01480 Chaleins (FR); MARDUEL, Joric, F-69380 Chazay D'azergues (FR)
(74) Mandataire: Vuillermoz, Bruno
(86) Numéro de dépôt international: PCT/FR2007/050916
(87) Numéro de publication internationale: WO 2007/110524

(56) Documents cités:
- EP-A- 0 086 687
- EP-A- 1 525 969
- EP-A- 1 526 214

## Description

### DOMAINE TECHNIQUE

La présente invention concerne un procédé pour la réalisation d'un semi-produit composite à base de matériau plastique et renforcé par des fibres. Plus précisément, la présente invention se rapporte à un procédé dans lequel les matériaux plastiques formant le liant du semi-produit sont mis en oeuvre sous forme de poudre.

Par matériau plastique, on entend tout matériau synthétique basé sur l'emploi de macromolécules et transformable par moulage, formage, coulage, généralement avec emploi de chaleur et de pression.

### ETAT ANTERIEUR DE LA TECHNIOUE

Dans les procédés de fabrication de semi-produits composites conventionnels, tel que celui décrit par le document US-A-4 487 647, le liant du semi-produit peut être mélangé aux filaments ou fils de renfort sous forme pulvérulente. Les fils sont d'abord déposés, en général par gravité, sur un convoyeur, formant ainsi une sorte de matelas, puis ils sont saupoudrés par des particules de la poudre du matériau plastique liant, avant que l'ensemble soit chauffé de manière à fondre le matériau plastique liant. L'ensemble est ensuite refroidi pour obtenir le semi-produit composite renforcé et estampable.

Un tel semi-produit est qualifié de « composite » car il résulte d'un mélange de fils ou de fibres en une matière déterminée avec un liant plastique en un autre matériau. Les fils confèrent au semi-produit composite son caractère renforcé, puisque, de manière connue, ils contribuent notablement aux propriétés mécaniques du composite.

De plus, le produit issu du procédé objet de la présente invention est qualifié de « semi-produit », car il se présente sous une forme brute que l'on peut et doit retravailler pour obtenir les pièces composites finales propres à remplir une fonction mécanique et/ou chimique déterminée, comme la résilience ou l'inertie chimique. C'est pourquoi ces semi-produits sont souvent dénommés thermoplastiques renforcés estampables (ou TRE et en anglais « *Glass Mat Thermoplastics* » ou GMT).

Par ailleurs, le semi-produit est dit « estampable », car il se présente généralement sous forme de plaques qui peuvent être ultérieurement mises en forme dans des moules adéquats. Il est ainsi possible de former des pièces présentant des géométries très diverses et complexes afin de remplir des fonctions spécifiques.

Cependant, dans les procédés de l'art antérieur, le mélange des particules de poudre avec les fibres, ou les fils, n'est pas réalisé de façon totalement satisfaisante et, lorsqu'il l'est, cela nécessite des opérations relativement fastidieuses. Ainsi, les opérations de mélange peuvent être réalisées au moyen de techniques telles que l'aiguilletage ou le cyclonage.

L'aiguilletage consiste à piquer à l'aide d'aiguilles et à de nombreuses reprises le mélange du matelas de fibres et de la poudre, de façon à lier les fibres entre elles par « entrelacement » et, partant, à homogénéiser la répartition des particules au sein des fibres.

Cependant, un tel aiguilletage est relativement complexe à mettre en oeuvre. Il peut en effet entraîner des pollutions du milieu ambiant et la présence d'impuretés lorsque l'on change la nature des matériaux plastiques mis en oeuvre pour produire un semi-produit composite différent. Un tel procédé requiert donc le confinement des poudres et des fibres ou le nettoyage complet de l'installation de production avant la production d'un nouveau semi-produit. De plus, pour obtenir un mélange bien homogène, il est nécessaire que les particules de poudre soient relativement fines, ce qui augmente le coût des matières premières employées.

Par ailleurs, il est possible de mélanger par cyclonage les fibres préalablement découpées avec des particules de poudre. Puis le mélange est nappé par projection pneumatique, avant passage de l'ensemble dans un four de manière à ramollir et à fixer la poudre qui peut alors remplir sa fonction de résine liante.

Toutefois, le cyclonage est une technique réservée à de grands volumes de production, car il nécessite des équipements chers et encombrants, dont les cyclones. En outre, il requiert une densité semblable entre les composants fibres et poudre pour homogénéiser correctement le mélange. En effet, de manière connue, un cyclone sépare les particules légères des particules lourdes. Ainsi, il n'est pas possible de réaliser un mélange de fibres de verres, de densité relativement élevée, avec des particules de poudre issues de matériaux plastiques. De plus, une partie des particules les plus légères est inévitablement emportée à travers l'évacuation d'air du cyclone et ne peut donc pas être introduite dans le mélange. Enfin, le cyclonage ne permet de mélanger que des fibres relativement courtes avec la poudre.

Pour réaliser un mélange entre fils et poudre homogène tout en évitant les problèmes mentionnés ci-dessus, le document US-A-4 487 647 qui décrit les caractéristiques du préambule de la revendication 1, propose de mettre en oeuvre un procédé relativement long et complexe, puisqu'il comporte trois étapes de chauffage, trois étapes de dépôt de poudre et deux étapes de compression. Un tel procédé requiert donc l'utilisation d'une ligne de production longue et coûteuse, ce qui augmente d'autant le coût du semi-produit composite résultant d'un tel procédé.

Par ailleurs, s'ils parviennent à une bonne homogénéité du mélange entre les matériaux en poudre et fibres au prix d'opérations complexes, les procédés de l'art antérieur demeurent néanmoins limités à des dimensions spécifiques des particules de poudre et des fibres de renfort. Ainsi, pour une certaine taille de fibres, il faut employer une poudre dont la granulométrie est sélectionnée de telle sorte que le diamètre maximal de ces particules soit limité à 500 µm voire à 200 µm, comme dans le cas du document US-A-4 487 647. Or, l'utilisation de poudre présentant une granulométrie fine a également des répercussions sur le prix de revient du semi-produit composite.

A l'inverse, si l'on sélectionne une poudre de taille trop grossière, le mélange des particules avec les fibres risque d'être trop hétérogène, si bien que le semi-produit composite risque de présenter des propriétés mécaniques amoindries voire défaillantes.

La présente invention a donc pour but de proposer un procédé pour la réalisation d'un semi-produit composite renforcé et estampable, dont la mise en oeuvre ne requiert pas une séquence de brassage ou de mélange trop fastidieuse, ni une sélection trop rigoureuse de la taille des particules de la poudre du matériau plastique liant.

### OBJET DE L'INVENTION

La présente invention vise donc un procédé pour la réalisation simple, relativement rapide et économique d'un semi-produit composite. Le procédé objet de l'invention est destiné à réaliser un semi-produit composite renforcé et estampable comprenant un ou plusieurs matériaux plastiques et des fibres coupées ou des filaments continus, de préférence en une ou plusieurs matières non conductrices de l'électricité, dont la température de ramollissement est supérieure à la plus haute des températures de ramollissement desdits matériaux. Le procédé objet de l'invention comprend les étapes consistant :
- à déposer les fibres ou les filaments, notamment par gravité, sur un convoyeur ;
- à saupoudrer des particules d'une poudre desdits matériaux plastiques sur les fibres ou les filaments, dans une proportion comprise entre 5% et 90% du poids total ;
- à mélanger les particules avec les fibres ou les filaments ;
- à porter le mélange à une température supérieure aux températures de ramollissement des matériaux, de manière à former le semi-produit ;

Selon l'invention, l'étape de mélange inclut le fait de soumettre le mélange à au moins un champ électrique sensiblement perpendiculaire à la direction d'avance du convoyeur et apte à mouvoir les particules et les fibres ou les filaments de manière à homogénéiser le mélange.

En d'autres termes, le mélange ou brassage des particules de poudre avec les fibres ou filaments est effectué au moyen d'au moins un champ électrique qui déplace et agite les particules de poudre, et les fibres dans une moindre mesure, dans le sens de l'épaisseur du matelas de fibres ou de filaments déposés sur le convoyeur. Ainsi, le mélange peut être rendu bien homogène au moyen des forces électrostatiques qui s'exercent sur les particules et sur les fibres ou filaments, forces qui améliorent l'imprégnation des particules entre les fibres. Par champ sensiblement perpendiculaire, on entend donc un champ selon une direction transversale au convoyeur, apte à déplacer les particules de poudre dans l'épaisseur du matelas de fibres. Pour cela, le champ doit présenter une composante perpendiculaire au convoyeur.

Selon une forme de réalisation de l'invention, le champ électrique peut présenter une tension alternative de fréquence comprise entre 2 Hz et 500 Hz et une amplitude comprise entre 100 kV/m et 80000 kV/m.

Un tel champ électrique permet de brasser efficacement les particules de poudre au milieu des fibres. En effet, un champ alternatif peut provoquer des déplacements oscillants des particules, ce qui tend à homogénéiser efficacement le mélange.

Selon un mode de réalisation de l'invention, l'étape de mélange peut inclure le fait de soumettre le mélange à une pluralité de champs électriques. Dans ce mode de réalisation, deux ensembles d'électrodes sont respectivement situés de part et d'autre du convoyeur, chacun des ensembles d'électrodes comportant une pluralité d'électrodes disposées successivement dans le sens d'avance du convoyeur. Chacun des champs électriques est généré entre deux électrodes appartenant respectivement à l'un et à l'autre des deux ensembles d'électrodes.

Selon une forme de réalisation particulière de ce mode de réalisation de l'invention, les champs électriques peuvent être issus de tensions continues et être orientés en sens opposés successivement selon le sens d'avance du convoyeur. Les champs successifs peuvent également être d'intensité différente de l'un à l'autre, pour provoquer des effets de brassage différentiés.

Un tel mode de réalisation et une telle forme de réalisation permettent de brasser efficacement la poudre et les fibres ou filaments.

En pratique, le champ peut être généré entre des électrodes globalement planes et parallèles entre elles.

Une telle géométrie des électrodes permet de générer un champ électrique apte à mélanger la poudre et les fibres sur toute la surface du semi-produit composite que l'on souhaite produire.

Selon une forme de réalisation pratique de l'invention, les matériaux plastiques peuvent être des matériaux thermoplastiques choisis parmi le groupe comprenant le polyéthylène, le polypropylène, les polyamides, les polyesters comme le polybutylène téréphthalate, les composés d'acide polylactique, le polychlorure de vinyle, les polyétherimides, les copolyamides, les copolyesters.

Selon une forme de réalisation alternative de l'invention, les matériaux plastiques peuvent être des matériaux thermodurcissables choisis parmi le groupe comprenant les polyesters insaturés, les polyépoxydes, les composés à base de mélamine, les composés phénoliques.

De tels matériaux, thermoplastiques ou thermodurcissables, présentent des propriétés diélectriques qui les rendent aptes à être mélangés au moyen du champ électrique caractéristique de l'invention.

En pratique, la poudre et/ou les fibres ou filaments peuvent comprendre des additifs et/ou des charges destinés à conférer au semi-produit des propriétés spécifiques, comme par exemple une faible densité, un caractère ignifuge ou antibactérien ou permettre de diminuer le coût global de la poudre.

Il peut en effet s'avérer utile d'ajouter des charges notamment fonctionnelles dans le semi-produit pour certaines applications.

Selon l'invention, la poudre peut présenter une granulométrie comprise entre un diamètre minimal de 0,1 µm et un diamètre maximal de 3000 µm, de préférence entre un diamètre minimal de 0,1 µm et un diamètre maximal de 1000 µm.

Une telle granulométrie, caractéristique d'une poudre peu sélectée, permet d'imprégner rapidement des quantités importantes de poudre au sein du matelas de fibres, sans engendrer de surcoût trop important.

En pratique, les fibres peuvent présenter un diamètre compris entre 1 µm et 100µm de préférence entre 10 µm et 50 µm, et une longueur comprise entre 2 mm et 200 mm, de préférence entre 10 mm et 70 mm.

Ces dimensions de fibres permettent également de réaliser un mélange homogène avec les particules de poudre.

Selon l'invention, les fibres ou les filaments peuvent être constitués d'une ou de plusieurs matières choisies parmi le groupe comprenant le verre, le lin, le jute, le sisal, le polyéthylène à haute ténacité, les céramiques en fibres et les aramides en fibres.

De telles matières, non conductrices de l'électricité, permettent la mise en oeuvre du procédé objet de l'invention.

Selon une forme de réalisation particulière de l'invention, les fibres ou les filaments peuvent être déposés au niveau du convoyeur sur une couche inférieure, une couche supérieure pouvant être déposée sur le mélange de fibres et poudre, ces couches comprenant un ou plusieurs matériaux plastiques dont la température de ramollissement est inférieure à la température de ramollissement des fibres, ces couches (2, 8) présentant en outre chacune une épaisseur comprise entre 5 µm et 500 µm.

L'adjonction de telles couches évite de salir ou de dégrader le convoyeur, car elle confine la poudre et les fibres. Ainsi, très peu de particules ou de fibres se déposent directement sur le convoyeur. Ces couches inférieure et supérieure permettent également de changer rapidement la nature des matériaux ou des matières formant le semi-produit composite, puisqu'elles limitent la pollution des composants de la ligne de production tels que le convoyeur. De plus, de telles couches, qui forment les « peaux » externes du semi-produit, peuvent conférer au semi-produit composite des caractéristiques spécifiques telles que la résistance chimique, une adhésivité élevée ou la qualité de l'aspect extérieur du semi-produit.

Selon une autre forme de réalisation, le procédé peut comporter en outre des étapes consistant à superposer des strates supplémentaires par rapport à celle formée par le mélange de fibres et de poudre. Ces strates sont destinées à conférer au semi-produit diverses propriétés mécaniques, chimiques ou autre.

Autrement dit, le semi-produit composite peut être formé de plusieurs couches superposées de fibres enduites de résine liante.

### BREVE DESCRIPTION DES FIGURES

La manière dont l'invention peut être réalisée et les avantages qui en découlent ressortiront mieux de l'exemple de réalisation qui suit. Cet exemple est donné à titre indicatif et non limitatif, à l'appui de la figure annexée.

La figure est une représentation schématique en coupe d'un dispositif apte à mettre en oeuvre le procédé objet de l'invention.

### MODE DE REALISATION

La figure illustre donc une ligne de production de semi-produit composite selon une forme de réalisation du procédé objet de la présente invention. Dans cette ligne de production, un dispositif de convoyage **1** est constitué par un convoyeur conventionnel dont la bande avance selon la direction matérialisée par la flèche **15.**

Au cours de la première étape illustrée par la figure, une couche inférieure **2** est déposée sur la bande du convoyeur **1.** La couche inférieure **2** se présente ici sous la forme d'un film enroulé sur un rouleau **3** et qui se déroule de manière synchrone avec l'avance du convoyeur **1.**

Conformément à l'invention, la couche inférieure **2** comprend un matériau plastique dont la température de ramollissement est inférieure à celle des fibres de renfort composant le semi-produit obtenu selon le procédé objet de l'invention. Cette couche inférieure **2** est mise en cohésion avec le reste du semi-produit composite lors de l'étape de traitement thermique décrite ci-après.

La deuxième étape du procédé illustré par la figure consiste à déposer, sur la bande du convoyeur **1,** des fibres **4** composant le semi-produit composite. En l'occurrence, les fibres **4** sont déposées sur le convoyeur **1** par le seul effet de la gravité. Les fibres **4** forment ainsi une sorte de sans cohésion sur le convoyeur **1.** On pourrait néanmoins prévoir un autre mécanisme de dépôt sans pour autant sortir du cadre de cette invention.

Conformément à une caractéristique de l'invention, les fibres **4** présentent une longueur de 50 mm et un diamètre de 17 µm. Il est possible d'employer un mélange de fibres de dimensions différentes, selon les propriétés que l'on souhaite conférer au semi-produit issu du procédé objet de l'invention, donc en fonction de son application finale.

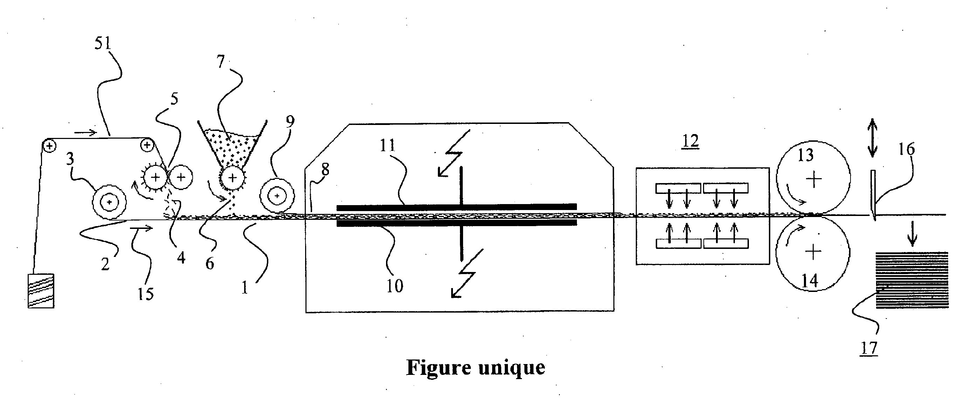

Dans l'exemple de la figure illustrant une forme de réalisation du procédé objet de l'invention, les fibres **4** sont constituées d'une matière non conductrice de l'électricité. Il s'agit en l'occurrence de fibres de verre E obtenues par découpe de stratifils (en anglais *« roving* ») ou de mèches de fibres d'une densité linéique de 2400 tex (donc de 2400 g pour 1000 m), au moyen du coupeur **5** opérant à une vitesse synchronisée avec l'avance **15** du convoyeur **1.** Par ailleurs, les fibres **4** sont ensimées avec un ensimage compatible avec le matériau pulvérulent employé tel que décrit ci-après. Dans l'exemple de la figure **1****,** le convoyeur est réglé à une vitesse d'avance de **2** m/min.

On pourrait également envisager de découper préalablement les fibres de verre au moyen d'un coupeur séparé et distant de la ligne de production illustrée sur la figure. Dans ce cas, les fibres préalablement coupées peuvent être simplement versées sur le convoyeur 1 par un distributeur opérant avec un débit résultant en un grammage de 1200 g/min.

Par ailleurs, les fibres **4** peuvent également comprendre une ou plusieurs autres matières, de préférence non conductrices, telles que le lin, le jute, le sisal, le polyéthylène à haute ténacité, les céramiques en fibres et les aramides en fibres. Il est également possible d'employer des fibres en matières semi-conductrices ou même conductrices, dans la mesure où leur présence, et en particulier leur proportion par rapport à la poudre et aux autres fibres, s'avère compatible avec le champ électrique mis en oeuvre dans l'étape de mélange ci-après décrite.

D'autres produits non fibreux peuvent être aussi employés pour mettre en oeuvre le procédé objet de l'invention, comme par exemple des plumes d'origine naturelle aptes à conférer leurs caractéristiques d'isolation au semi-produit.

Par ailleurs, il est aussi possible d'employer un mélange de fibres de natures et/ou de dimensions différentes, selon les propriétés à conférer au semi-produit issu du procédé objet de l'invention, donc en fonction de son application finale.

Il est également possible, sans pour autant sortir du cadre de cette invention, d'employer une nappe préformée de fibres très faiblement liées entre elles. Cette nappe peut être formée préalablement ou en remplacement de l'étape de déversement des fibres **4.**

De même, on peut mettre en oeuvre des fibres relativement longues, voire des fils ou filaments continus sous forme d'une nappe unidirectionnelle. Une telle nappe de filaments continus peut remplacer les fibres ou leur être ajoutée avant ou après l'étape de dépôt des fibres décrite ci-dessus.

Au cours de l'étape suivante du procédé objet de l'invention, on saupoudre le « matelas » de fibres avec des particules **6** d'une poudre constituée d'un ou de plusieurs matériaux plastiques destinés à remplir la fonction de liant entre les fibres **4** pour le semi-produit composite final. En l'occurrence, le matériau employé est du polypropylène.

Dans le cas de la figure, les particules **6** se déposent sur les fibres de verre **4** et la couche inférieure **2** par le simple effet de la gravité. Un dispositif de saupoudrage **7** dose le débit de ces particules de poudre **6** de manière synchronisée avec l'avance **15** du convoyeur **1.** Le dispositif de saupoudrage **7** opère à un débit permettant d'obtenir la proportion voulue entre fibres **4** et poudre **6,** en l'occurrence à un débit de 800 g/min.

Dans l'exemple de la figure, le rapport massique de la poudre **6** par rapport au poids total des fibres **4** avec la poudre **6** est de 60%. Ce rapport massique est déterminé en fonction du poids surfacique, ou grammage, que l'on recherche pour le semi-produit composite final. Le poids surfacique des semi-produits obtenus selon le procédé objet de l'invention peuvent aller de 50 g/m² à 10 000 g/m².

Selon une caractéristique de l'invention, les matériaux plastiques constitutifs de la poudre **6** présentent chacun une température de ramollissement sensiblement inférieure à celle des fibres **4.** Cela évite tout simplement que les fibres **4** ne fondent avec les matériaux plastiques liants au cours de l'étape de traitement thermique décrite ci-après. Il est en effet important que les fibres restent intègres dans le semi-produit composite final afin de lui conférer les propriétés de résistance mécanique recherchées.

De nombreux autres matériaux thermoplastiques conviennent pour constituer la poudre **6,** parmi lesquels on peut citer le polyéthylène, le polypropylène, les polyamides, les polyesters comme le polybutylène téréphthalate, les composés d'acide polylactique, le polychlorure de vinyle, les polyétherimides, les copolyamides, les copolyesters. De même, de nombreux matériaux thermodurcissables peuvent convenir, comme les polyesters insaturés, les polyépoxydes, les composés à base de mélamine, les composés phénoliques.

On peut aussi envisager d'ajouter des charges, de nature organique ou non, dans le ou les matériau(x) pulvérulents de façon à conférer des propriétés spécifiques au semi-produit, comme par exemple une faible densité, un caractère ignifuge ou antibactérien ou permettre de diminuer le coût global de la poudre etc. Ces charges peuvent être mélangées avec les poudres utilisées comme liant ou être incorporées lors d'une autre étape.

L'étape suivante du procédé consiste, à l'instar de la première étape décrite en relation avec la figure, à déposer une couche supérieure **8** sur les composants déjà présents sur le convoyeur **1.** Tout comme la couche inférieure **2** et pour les mêmes raisons, la couche supérieure **8** est constituée de matériaux plastiques dont les températures de ramollissement sont inférieures à celles des fibres **4.** Il peut s'agir d'un matériau à base de polyoléfine, qui est chimiquement inerte.

De même, la couche supérieure **8** est également déposée sous forme de film à une vitesse synchrone avec la vitesse **15** du convoyeur **1.** La couche supérieure **8** est également stockée sous forme de rouleau déroulé par un distributeur **9.**

Les dimensions et les matériaux constitutifs des couches **2** et **8** sont bien évidemment sélectionnés en fonction de l'application voulue. De manière avantageuse, la couche **2** peut présenter une largeur égale à la largeur du semi-produit composite final de manière à éviter de salir ou de polluer la bande transporteuse du convoyeur **1** lorsque l'on y dépose les fibres **4** et la poudre **6.** Cette caractéristique permet de passer rapidement d'un semi-produit à l'autre.

Les couches **2** et **8** formant les « peaux » externes du semi-produit composite final, elles peuvent également remplir des fonctions « de surface » liées à son aspect, à son adhésivité ou à sa résistance chimique. Ces couches peuvent présenter chacune une épaisseur comprise entre 5 µm et 500 µm. En l'occurrence, l'épaisseur de la couche **2** et celle de la couche **8** valent environ 50 µm.

En outre, l'une et/ou l'autre des couches **2** et **8** peu(ven)t être constituée(s) d'un film bi- ou multicouches, en différents matériaux coextrudés comme du polypropylène avec un composé de copolyamide. Le rôle de tels matériaux multicouches est d'assurer, d'une part, la cohésion avec le coeur du semi-produit comprenant fibres et résine liante en poudre; et, d'autre part, des fonctions de surface comme celles précédemment mentionnées.

Par ailleurs, l'une et/ou l'autre de ces couches pourrai(en)t aussi être formée(s) par d'autres composants tels que des grilles ou par des produits textiles du type non tissés. Les fonctions de ces composants étant déterminées par l'application finale du semi-produit, de nombreux composants peuvent entrer dans la composition des couches **2** et **8.**

L'étape suivante consiste à mélanger intimement les fibres **4** avec la poudre **6** de manière à imprégner le matelas de fibres de façon homogène avec les particules **6** de la poudre formant le liant. Pour cela et selon une caractéristique du procédé objet de l'invention, le mélange des fibres **4** avec la poudre **6** est soumis à un champ électrique généré entre des électrodes **10** et **11,** qui sont globalement planes et parallèles entre elles selon la direction perpendiculaires à la figure. Les particules de poudre **6** et les fibres **4** sont alors mises en mouvement, globalement selon les lignes de champ.

En effet, de manière connue dans le domaine du poudrage électrostatique, un champ électrique ionise les molécules de dioxygène de l'air, lesquelles se fixent sur les particules de poudre, dont la charge ainsi formée dépend de la permittivité diélectrique du matériau qui les constitue. C'est pourquoi il est préférable d'utiliser des matériaux plastiques faiblement conducteurs afin de mettre en mouvement les poudres de manière satisfaisante. Néanmoins, des charges conductrices peuvent être utilisées en mélange ou lors d'un saupoudrage ultérieur.

En fonction du poids surfacique, ou grammage, recherché pour le semi-produit composite final, les électrodes **10** et **11** doivent être espacées d'une distance comprise entre 0,5 mm et 70 mm. Du reste, on peut prévoir de monter au moins l'une des électrodes **10** et **11** sur un support mobile de façon à adapter leur espacement en fonction de l'épaisseur du semi-produit à réaliser.

Pour éviter d'atteindre la tension disruptive de l'air situé entre les électrodes sous tension, on peut prévoir de les revêtir d'un matériau isolant dont la permittivité diélectrique est suffisamment élevée pour résister au champ généré. En effet, pour des raisons évidentes, il est souhaitable de ne pas générer d'arc électrique entre les électrodes.

Pour réaliser un mélange homogène entre les fibres **4** et les particules de poudre **6,** on emploie un champ électrique présentant une tension alternative de forme sinusoïdale, dont la fréquence est de 50 Hz. De plus, le champ électrique généré dans l'exemple illustré par la figure présente une amplitude de 10000 kV/m.

De telles caractéristiques du champ électrique le rendent apte à mouvoir les particules **6** et les fibres **4.** Lorsque l'on applique un tel champ électrique entre les électrodes **10** et **11,** on met en mouvement, non seulement les particules **6,** mais également, et dans une moindre mesure, les fibres **4.** En effet, les fibres **4,** coupées ou en filaments continus, ne sont pas encore liées entre-elles, si bien qu'elles sont susceptibles de bouger sous l'effet du champ électrique généré entre les électrodes **10** et **11.**

Selon d'autres formes de réalisation, la tension alternative du champ électrique peut présenter une forme triangulaire, carrée, impulsionnelle ou une forme plus complexe. La forme d'onde influe évidemment sur l'homogénéité du mélange entre poudre et fibres, si bien qu'elle peut être déterminée en fonction des composants du semi-produit et des propriétés que l'on souhaite lui conférer.

Alternativement encore, on peut prévoir d'installer plusieurs électrodes disposées successivement dans le sens d'avance **15** du convoyeur **1.** Ainsi, il est possible de réaliser le mélange en générant une succession de champs électriques entre les électrodes situées de chaque côté du convoyeur **1** et relativement étroites selon le sens d'avance **15.** Il est alors nécessaire d'orienter les champs deux à deux successifs dans un sens et dans l'autre, c'est-à-dire vers le haut et vers le bas, formant ainsi des champs « antiparallèles ». Cela permet d'homogénéiser efficacement le mélange entre fibres **4** et poudre **6,** car le mouvement des particules **6** et des fibres **4** se fait, au fur et à mesure de l'avance du convoyeur **1,** alternativement vers une direction puis vers la direction opposée. En fonction des propriétés recherchées et/ou des matériaux et matières mis en oeuvre, les champs électriques successifs peuvent être issus de tensions continues ou alternatives et présenter diverses amplitudes et/ou orientation, dans la mesure où ils présentent une composante perpendiculaire au convoyeur **1.**

Il est également possible d'installer des électrodes présentant une forme différente, c'est-à-dire non planes. Ainsi, on peut employer des électrodes tubulaires, telles que celles décrites dans le document WO2005/038123 disposées successivement dans le sens d'avance **15** du convoyeur **1** et soumises à des tensions alternatives. La géométrie et la disposition de ces électrodes doit en tout cas privilégier les composantes de champ électrique perpendiculaire au convoyeur **1,** de manière à homogénéiser efficacement le mélange entre fibres **4** et particules de poudre **6.**

En fonction de la quantité de poudre déposée sur le matelas de fibres et de la durée et de l'amplitude du traitement par le champ électrique, la poudre peut se déplacer de manière importante et on peut observer, dans certaines conditions, l'accumulation d'un excédent de poudre sur les surfaces extérieures des couches **2** et **8.** Il est ainsi créé un état de surface propice au collage lors de l'utilisation du semi-produit.

Dans tous les cas, la différence de potentiel entre les électrodes **10** et **11** peut être réglée entre ces valeurs minimale et maximale en fonction des caractéristiques du semi-produit composite, en particulier son épaisseur et la nature des matériaux qui le composent.

L'étape suivante est une étape de traitement thermique, classique dans les procédés de fabrication de semi-produits composites. En général, un tel traitement thermique est accompagné ou suivi d'une mise sous pression du semi-produit. L'ensemble de ces étapes de traitement thermique et de mise sous pression est souvent dénommé « calandrage ».

Dans l'exemple de la figure, le chauffage du semi-produit est assuré par un four à thermique à convection et sa mise sous pression se fait entre deux rouleaux presseurs **13** et **14.**

Le séquencement des étapes de chauffage, de mise sous pression et de refroidissement éventuel, doit être déterminé en fonction du semi-produit que l'on souhaite obtenir. Dans tous les cas et conformément à une caractéristique de l'invention, il est important de porter le mélange à une température supérieure aux températures de ramollissement des matériaux plastiques constituant le liant en poudre **6** et les couches inférieure **2** et supérieure **8** du semi-produit. Cela permet en effet de rendre ces matériaux visqueux et, partant, d'assurer leur répartition et leur cohésion au sein des fibres **4.** Le semi-produit est ensuite refroidi jusqu'à la température ambiante.

De plus, dans le cas d'un matériau thermodurcissable, la température de chauffage doit être inférieure à la température de réticulation afin de pouvoir mettre en forme le produit final au cours d'une étape ultérieure non représentée sur la figure. Ceci est rendu possible car la plupart des matériaux plastiques thermodurcissables passent chacun, lors de leur chauffage, par un état « pseudoplastique », caractérisé par un ramollissement, réversible à une température bien inférieure à la température de réticulation.

Typiquement, les températures de chauffage lors de l'étape de calandrage peuvent aller de 100°C à 400°C selon la nature des matériaux employés. Ainsi par exemple, il faut chauffer au-delà de 160°C pour atteindre le point de fusion du polypropylène et au-delà de 180°C pour atteindre celui de l'acide polylactique ou encore au-delà de 220°C pour atteindre celui du polyamide 6.

Cette étape facultative de mise sous pression par les rouleaux presseurs **13** et **14** a également pour fonction de conformer les produits à l'épaisseur finale souhaitée pour le semi-produit.

Par ailleurs, la bande transporteuse du convoyeur **1** doit présenter des caractéristiques mécaniques permettant son entraînement et la résistance à la mise sous pression du semi-produit, mais également une résistance chimique à l'oxydation par l'ozone produit lors de l'ionisation de l'air sous l'effet du champ électrique. Dans l'exemple de la figure, la bande transporteuse est constituée d'un support tissé enduit sur ses deux faces de polytétrafluoroéthylène, mais on pourrait également utiliser un assemblage de polyuréthane sur du verre ou du polyester.

Comme dans le cas des procédés de fabrication conventionnelle, la vitesse d'avance **15** du convoyeur **1** est réglée en fonction de paramètres tels que le grammage du semi-produit, la température de ramollissement des matériaux liants et de ceux des couches **2** et **8** ou encore des dimensions de la machine et du temps nécessaire de traitement dans le champ électrique.

Par ailleurs, le procédé objet de l'invention peut être mis en oeuvre pour produire un semi-produit composite comportant plusieurs couches superposées. Pour cela, on peut par exemple envisager de remplacer l'un des rouleaux formant les couches **2** ou **8** par un rouleau comprenant déjà un semi-produit composite renforcé par des fibres. On obtient ainsi un semi-produit composite stratifié présentant plusieurs strates de fibres superposées.

Par ailleurs, en fonction des applications recherchées et sans sortir du cadre de cette invention, on peut envisager de superposer d'autres strates par rapport à celle formée par le mélange de fibres **4** et de poudre **6.** Il peut ainsi s'agir de structures poreuses, comme des mousses ou des structures en nid d'abeillés, mais aussi de structures textiles, comme des non-tissés, des tissus ou des structure unidirectionnelles. Ces strates peuvent ainsi conférer au semi-produit diverses propriétés mécaniques, chimiques ou autre.

On peut aussi envisager de nombreuses autres superpositions des couches par rapport au mélange de fibres et poudre. Ainsi, un semi-produit composé de fibres et de poudre réalisé au moyen du procédé objet de l'invention peut constituer l'une des couches **2** ou **8** de manière à former finalement une structure « en sandwich ».

Toutes ces superpositions ou insertions ont dans tous les cas en commun l'étape de mélange, caractéristique de l'invention, au moyen d'un champ électrique. Pour réaliser les deux mélanges mentionnés ci-dessus, il faut évidemment doubler les étapes de déversement de fibres et de saupoudrage.

Ainsi, un semi-produit composite, en résine plastique renforcée par des fibres , réalisé selon le procédé objet de l'invention se présente sous forme de plaques **17** découpées de façon calibrée par un outil **16,** puis accumulées en fin de ligne de production. En fonction de la nature des matériaux employés, le semi-produit peut également être roulé, ce qui peut en faciliter le transport, la manipulation et/ou l'utilisation.

Le semi-produit, en plaque ou en rouleau, est ultérieurement transformé par emboutissage ou par estampage, c'est-à-dire par un traitement qui associe en général chauffage et mise sous pression au sein d'un moule. Les produits composites ainsi moulés présentent des propriétés bien connues de légèreté, de rigidité, de résistance aux chocs, etc... Ainsi, un tel produit composite peut former une poutre d'absorption pour pare-choc automobile.

Les paramètres caractéristiques du procédé objet de l'invention, tels que le débit des fibres déposées, le débit des particules saupoudrées, la vitesse d'avance du convoyeur etc., sont déterminés en fonction des proportions mélangées et des masses volumiques respectives des matériaux constitutifs des fibres et des matières constitutives des poudres, de manière à obtenir le grammage souhaité pour ledit produit, généralement entre 50 g/m² et 5000 g/m².

## Revendications

1. Procédé pour la réalisation d'un semi-produit composite renforcé et estampable comprenant un ou plusieurs matériaux plastiques et des fibres coupées ou des filaments continus (4), de préférence en une ou plusieurs matières non conductrices de l'électricité, dont la température de ramollissement est supérieure à la plus haute des températures de ramollissement desdits matériaux, comprenant les étapes consistant :
- à déposer lesdites fibres ou lesdits filaments (4), notamment par gravité, sur un convoyeur (1) ;
- à saupoudrer des particules (6) d'une poudre desdits matériaux plastiques sur lesdites fibres ou lesdits filaments (4), dans une proportion comprise entre 5% et 90% du poids total ;
- à mélanger lesdites particules (6) avec lesdites fibres ou lesdits filaments (4) ;
- à porter le mélange à une température supérieure aux températures de ramollissement desdits matériaux, de manière à former ledit semi-produit ;
***caractérisé* en ce que** l'étape de mélange inclut le fait de soumettre ledit mélange (4, 6) à au moins un champ électrique sensiblement perpendiculaire à la direction d'avance (15) dudit convoyeur (1), ledit champ étant apte à mouvoir lesdites particules (6) et lesdites fibres ou lesdits filaments (4) de manière à homogénéiser ledit mélange (4, 6).

2. Procédé selon la revendication 1, ***caractérisé* en ce que** ledit champ électrique présente une tension alternative de fréquence comprise entre 2 Hz et 500 Hz et une amplitude comprise entre 100 kV/m et 80000 kV/m.

3. Procédé selon l'une des revendications précédentes, ***caractérisé* en ce que** l'étape de mélange inclut le fait de soumettre ledit mélange (4, 6) à une pluralité de champs électriques, deux ensembles d'électrodes étant respectivement situés de part et d'autre du convoyeur (1), chacun desdits ensemble d'électrodes comportant une pluralité d'électrodes disposées successivement dans le sens d'avance (15) dudit convoyeur (1), et ***en ce que*** chacun desdits champs électriques est généré entre deux électrodes appartenant respectivement à l'un et à l'autre desdits deux ensembles d'électrodes.

4. Procédé selon la revendication 3, ***caractérisé* en ce que** lesdits champs électriques sont issus de tensions continues et **en ce qu'**ils sont orientés en sens opposés successivement selon le sens d'avance (15) dudit convoyeur (1).

5. Procédé selon l'une des revendications précédentes, ***caractérisé* en ce que** ledit champ électrique est généré entre des électrodes (10, 11) globalement planes et parallèles entre elles.

6. Procédé selon l'une des revendications précédentes, ***caractérisé* en ce que** lesdits matériaux plastiques sont des matériaux thermoplastiques choisis parmi le groupe comprenant le polyéthylène, le polypropylène, les polyamides, les polyesters comme le polybutylène téréphthalate, les composés d'acide polylactique, le polychlorure de vinyle, les polyétherimides, les copolyamides, les copolyesters.

7. Procédé selon l'une des revendications 1 à 3, ***caractérisé* en ce que** lesdits matériaux plastiques sont des matériaux thermodurcissables choisis parmi le groupe comprenant les polyesters insaturés, les polyépoxydes, les composés à base de mélamine, les composés phénoliques.

8. Procédé selon l'une des revendications précédentes, ***caractérisé* en ce que** ladite poudre comprend des additifs et/ou des charges destinés à conférer au semi-produit des propriétés spécifiques, comme par exemple une faible densité, un caractère ignifuge ou antibactérien ou permettre de diminuer le coût global de la poudre.

9. Procédé selon l'une des revendications précédentes, ***caractérisé* en ce que** ladite poudre (6) présente une granulométrie comprise entre un diamètre minimal de 0,1 µm et un diamètre maximal de 3000 µm, de préférence entre un diamètre minimal de 0,1 µm et un diamètre maximal de 1000 µm.

10. Procédé selon l'une des revendications précédentes, ***caractérisé* en ce que** lesdites fibres (4) présentent un diamètre compris entre 1µm et 100µm, de préférence entre 10 µm et 50 µm, et une longueur comprise entre 2 mm et 200 mm, de préférence entre 10 mm et 70 mm.

11. Procédé selon l'une des revendications précédentes, ***caractérisé* en ce que** lesdites fibres ou lesdits filaments (4) sont constitués d'une ou de plusieurs matières choisies parmi le groupe comprenant le verre, le lin, le jute, le sisal, le polyéthylène à haute ténacité, les céramiques en fibres et les aramides en fibres.

12. Procédé selon l'une des revendications précédentes, ***caractérisé* en ce que** lesdites fibres ou lesdits filaments (4) sont déposés au niveau dudit convoyeur (1) sur une couche inférieure (2), une couche supérieure (8) pouvant être déposée sur ledit mélange (4, 6), lesdites couches inférieure (2) et supérieure (8) comprenant un ou plusieurs matériaux plastiques dont la température de ramollissement est inférieure à la température de ramollissement des fibres (4).

13. Procédé selon l'une des revendications précédentes, ***caractérisé* en ce qu'**il comporte en outre des étapes consistant à superposer des strates supplémentaires par rapport à celle formée par le mélange de fibres (4) et de poudre (6), lesdites strates étant destinées à conférer au semi-produit diverses propriétés mécaniques, chimiques ou autre.

## Claims

1. Process for preparing a reinforced stampable composite semi-finished product comprising one or more plastics and chopped fibres or continuous filaments (4), preferably made of one or more electrically non-conductive materials, the softening point of which is higher than the highest of the softening points of the said materials, comprising the steps consisting in:
- depositing the said fibres or the said filaments (4), especially by gravity, onto a conveyor (1);
- sprinkling particles (6) of a powder of the said plastics onto the said fibres or the said filaments (4), in a proportion of between 5% and 90% of the total weight;
- mixing the said particles (6) with the said fibres or the said filaments (4);
- bringing the mixture to a temperature above the softening points of the said materials, so as to form the said semi-finished product;
***characterized* in that** the mixing step includes subjecting the said mixture (4, 6) to at least one electric field substantially perpendicular to the direction of advance (15) of the said conveyor (1), the said field being capable of moving the said particles (6) and the said fibres or the said filaments (4) so as to homogenize the said mixture (4, 6).

2. Process according to Claim 1, ***characterized* in that** the said electric field has an alternating voltage with a frequency of between 2 Hz and 500 Hz and an amplitude of between 100 kV/m and 80 000 kV/m.

3. Process according to either of the preceding claims, ***characterized* in that** the mixing step includes subjecting the said mixture (4, 6) to a plurality of electric fields, two arrays of electrodes being respectively arranged on either side of the conveyor (1), each of the said arrays of electrodes comprising a plurality of electrodes arranged successively in the direction of advance (15) of the said conveyor (1), and ***in that*** each of the said electric fields is generated between two electrodes belonging respectively to one and the other of the said two arrays of electrodes.

4. Process according to Claim 3, ***characterized* in that** the said electric fields are derived from continuous voltages and ***in that*** they are oriented in opposite directions successively in the direction of advance (15) of the said conveyor (1).

5. Process according to one of the preceding claims, ***characterized* in that** the said electric field is generated between electrodes (10, 11) which are globally flat and mutually parallel.

6. Process according to one of the preceding claims, ***characterized* in that** the said plastics are thermoplastics chosen from the group comprising polyethylene, polypropylene, polyamides, polyesters, for instance polybutylene terephthalate, polylactic acid compounds, polyvinyl chloride, polyetherimides, copolyamides and copolyesters.

7. Process according to one of Claims 1 to 3, ***characterized* in that** the said plastics are thermosetting materials chosen from the group comprising unsaturated polyesters, polyepoxides, melamine-based compounds and phenolic compounds.

8. Process according to one of the preceding claims, ***characterized* in that** the said powder comprises additives and/or fillers intended for imparting specific properties to the semi-finished product, for instance a low density, a flame-retardant or antibacterial nature, or for reducing the overall cost of the powder.

9. Process according to one of the preceding claims, ***characterized* in that** the said powder (6) has a particle size of between a minimum diameter of 0.1 µm and a maximum diameter of 3000 µm, preferably between a minimum diameter of 0.1 µm and a maximum diameter of 1000 µm

10. Process according to one of the preceding claims, ***characterized* in that** the said fibres (4) have a diameter of between 1 µm and 100 µm and preferably between 10 µm and 50 µm, and a length of between 2 mm and 200 mm and preferably between 10 mm and 70 mm.

11. Process according to one of the preceding claims, ***characterized* in that** the said fibres or the said filaments (4) consist of one or more materials chosen from the group comprising glass, flax, jute, sisal, high-strength polyethylene, ceramic fibres and aramid fibres.

12. Process according to one of the preceding claims, ***characterized* in that** the said fibres or the said filaments (4) are deposited on the said conveyor (1) onto a lower layer (2), an upper layer (8) possibly being deposited onto the said mixture (4, 6), the said lower (2) and upper (8) layers comprising one or more plastics whose softening point is below the softening point of the fibres (4).

13. Process according to one of the preceding claims, ***characterized* in that** it also comprises steps consisting in superposing additional strata relative to that formed by the mixture of fibres (4) and of powder (6), the said strata being intended to impart various mechanical, chemical or other properties to the semi-finished product.

## Patentansprüche

1. Verfahren zur Herstellung eines verstärkten und formpressbaren Verbund-Halbfertigprodukts, das einen oder mehrere Kunststoff/e und Schnittfasern oder durchgehende Filamente (4), vorzugsweise aus einem oder mehreren elektrisch nicht leitfähigen Material/ien umfasst, deren Erweichungstemperatur höher ist als die höchste der Erweichungstemperaturen der Kunststoffe, die Schritte umfassend, die darin bestehen:
- die Fasern oder die Filamente (4), insbesondere durch Schwerkraft, auf einer Fördereinrichtung (1) abzulegen;
- Partikel (6) eines Pulvers der Kunststoffe in einem Anteil zwischen 5% und 90% des Gesamtgewichts auf die Fasern oder die Filamente (4) aufzustäuben;
- die Partikel (6) mit den Fasern oder den Filamente (4) zu mischen;
- das Gemisch auf eine Temperatur zu bringen, die höher ist als die Erweichungstemperaturen der Kunststoffe, um das Halbfertigprodukt zu bilden;
**dadurch gekennzeichnet, dass** der Schritt des Mischens beinhaltet, das Gemisch (4, 6) mindestens einem elektrischen Feld auszusetzen, das im Wesentlichen senkrecht zur Vorschubrichtung (15) der Fördereinrichtung (1) liegt, wobei das Feld dazu geeignet ist, die Partikel (6) und die Fasern oder die Filamente (4) so zu bewegen, dass das Gemisch (4, 6) homogenisiert wird.

2. Verfahren nach Anspruch 1, **dadurch gekennzeichnet, dass** das elektrische Feld eine Wechselspannung mit einer Frequenz zwischen 2 Hz und 500 Hz und einer Amplitude zwischen 100 kV/m und 80000 kV/m aufweist.

3. Verfahren nach einem der vorhergehenden Ansprüche, **dadurch gekennzeichnet, dass** der Schritt des Mischens beinhaltet, das Gemisch (4, 6) einer Vielzahl von elektrischen Feldern auszusetzen, wobei sich jeweils zwei Elektrodengruppen auf beiden Seiten der Fördereinrichtung (1) befinden, wobei jede der Elektrodengruppen eine Vielzahl von Elektroden umfasst, die aufeinanderfolgend in der Vorschubrichtung (15) der Fördereinrichtung (1) angeordnet sind, und **dass** jedes der elektrischen Felder zwischen zwei Elektroden erzeugt wird, die zu der einen bzw. der anderen der beiden Elektrodengruppen gehören.

4. Verfahren nach Anspruch 3, **dadurch gekennzeichnet, dass** die elektrischen Felder aus Gleichspannungen entstehen, und dass sie aufeinanderfolgend in der Vorschubrichtung (15) der Fördereinrichtung (1) in entgegengesetzte Richtungen gerichtet sind.

5. Verfahren nach einem der vorhergehenden Ansprüche, **dadurch gekennzeichnet, dass** das elektrische Feld zwischen insgesamt flächigen und zueinander parallelen Elektroden (10, 11) erzeugt wird.

6. Verfahren nach einem der vorhergehenden Ansprüche, **dadurch gekennzeichnet, dass** es sich bei den Kunststoffen um thermoplastische Materialien handelt, die aus der Gruppe ausgewählt sind, die Polyethylen, Polypropylen, Polyamide, Polyester wie Polybutylenterephthalat, Polymilchsäureverbindungen, Polyvinylchlorid, Polyetherimide, Copolyamide, Copolyester umfasst.

7. Verfahren nach einem der Ansprüche 1 bis 3, **dadurch gekennzeichnet, dass** es sich bei den Kunststoffen um wärmehärtbare Materialien handelt, die aus der Gruppe ausgewählt sind, die ungesättigte Polyester, Polyepoxide, Verbindungen auf Grundlage von Melamin, phenolische Verbindungen umfasst.

8. Verfahren nach einem der vorhergehenden Ansprüche, **dadurch gekennzeichnet, dass** das Pulver Additive und/oder Füllstoffe umfasst, die dazu bestimmt sind, dem Halbfertigprodukt spezifische Eigenschaften zu verleihen, wie zum Beispiel eine geringe Dichte, eine flammfeste oder antibakterielle Beschaffenheit, oder es ermöglichen, die Gesamtkosten des Pulvers zu senken.

9. Verfahren nach einem der vorhergehenden Ansprüche, **dadurch gekennzeichnet, dass** das Pulver (6) eine Kornklassierung zwischen einem Mindestdurchmesser von 0,1 µm und einem Höchstdurchmesser von 3000 µm, vorzugsweise zwischen einem Mindestdurchmesser von 0,1 µm und einem Höchstdurchmesser von 1000 µm aufweist.

10. Verfahren nach einem der vorhergehenden Ansprüche, **dadurch gekennzeichnet, dass** die Fasern (4) einen Durchmesser zwischen 1 µm und 100 µm, vorzugsweise zwischen 10 µm und 50 µm und eine Länge zwischen 2 mm und 200 mm, vorzugsweise zwischen 10 mm und 70 mm aufweisen.

11. Verfahren nach einem der vorhergehenden Ansprüche, **dadurch gekennzeichnet, dass** die Fasern oder die Filamente (4) aus einem oder mehreren Material/ien bestehen, die aus der Gruppe ausgewählt sind, die Glas, Flachs, Jute, Sisal, Polyethylen mit hoher Schlagfestigkeit, Faserkeramik und AramidFasern umfasst.

12. Verfahren nach einem der vorhergehenden Ansprüche, **dadurch gekennzeichnet, dass** die Fasern oder die Filamente (4) im Bereich der Fördereinrichtung (1) auf einer unteren Schicht (2) abgelegt werden, wobei eine obere Schicht (8) über das Gemisch (4, 6) gelegt werden kann, wobei die untere (2) und obere Schicht (8) einen oder mehrere Kunststoff/e umfassen, dessen/deren Erweichungstemperatur niedriger ist als die Erweichungstemperatur der Fasern (4).

13. Verfahren nach einem der vorhergehenden Ansprüche, **dadurch gekennzeichnet, dass** es darüber hinaus Schritte umfasst, die darin bestehen, in Bezug auf diejenige Schicht, die durch das Gemisch aus Fasern (4) und Pulver (6) gebildet wurde, zusätzliche Schichten darüber anzubringen, wobei die Schichten dazu bestimmt sind, dem Halbfertigprodukt verschiedene mechanische, chemische o. dgl. Eigenschaften zu verleihen.
